# EUROPEAN PATENT APPLICATION

(11) **EP 3 933 743 A1**
(43) Date of publication of application: **05.01.2022**
(21) Application number: 20767224.7
(22) Date of filing: 10.01.2020
(51) Int. Cl.: G06Q 40/04

(54) **METHOD AND DEVICE FOR BLOCKCHAIN TRANSACTION TRACING**

(30) Priority: 01.03.2019 CN 201910155057
(71) Applicant: China Unionpay Co., Ltd., Shanghai 200135 (CN)
(72) Inventor: XU, Yuzhuang, Shanghai 200135 (CN); ZHOU, Yu, Shanghai 200135 (CN)
(74) Representative: Cohausz & Florack
(86) International application number: PCT/CN2020/071551
(87) International publication number: WO 2020/177488

(57) **Abstract**

A method and device for blockchain transaction tracing, which are used to solve the problems in the prior art of being unable to quickly construct a tracing path for a transaction and relatively large system overhead. The method comprises: acquiring information of a transaction to be traced, the information of the transaction to be traced comprising an input value for the transaction to be traced; determining a leaf node of the transaction to be traced according to the input value for the transaction to be traced and a Bloom filter corresponding to each block in a blockchain system, the Bloom filter storing an output value of a transaction comprised in the block; and according to the leaf node of the transaction to be traced, generating a tracing path for the transaction to be traced. By means of carrying out transaction tracing on the basis of the Bloom filter corresponding to each block and the input value for the transaction to be traced as disclosed in the embodiments of the present invention, a tracing path for the transaction to be traced may be quickly generated, which is beneficial for improving the tracing efficiency of a tracing path, and which decreases system overhead.

## Description

### CROSS-REFERENCE TO RELATED APPLICATION

This application claims priority of Chinese Patent Application No. 201910155057.1, entitled "Method and Device for Blockchain Transaction Tracing", filed with the State Intellectual Property Office of P. R. China on March 01, 2019, the entire content of which is incorporated herein by reference.

### FIELD OF THE DISCLOSURE

The present disclosure generally relates to the technical field of blockchain and, more particularly, relates to a method and a device for blockchain transaction tracing.

### BACKGROUND

When researching on digital currency technology projects based on blockchain, it is often necessary to trace a transaction path of a transaction from a current block to an ancestor block (including a genesis block) in a blockchain system with a UTXO (unspent transaction output) account system. If each blockchain is scanned sequentially, the cost in both the space and time is relatively large, resulting in a waste of system resources.

### BRIEF SUMMARY OF THE DISCLOSURE

The embodiments of the present disclosure provide a method and a device for blockchain transaction tracing to quickly construct a transaction tracing path and reduce system cost.

The embodiments of the present disclosure provide a method for blockchain transaction tracing, including:
acquiring information of a transaction-to-be-traced, where the information of the transaction-to-be-traced includes an input value of the transaction-to-be-traced;
according to the input value of the transaction-to-be-traced and a Bloom filter corresponding to each block in a blockchain system, determining a leaf node of the transaction-to-be-traced, where the Bloom filter stores an output value of a transaction contained in each block; and
according to the leaf node of the transaction-to-be-traced, generating a tracing path of the transaction-to-be-traced.

In the above-mentioned technical solution, by configuring the Bloom filter corresponding to each block, based on the input value of the transaction to-be-traced, the tracing path of the transaction-to-be-traced may be quickly generated, which is beneficial for improving the tracing efficiency of the tracing path and reducing the system cost.

Optionally, according to the input value of the transaction-to-be-traced and the Bloom filter corresponding to each block in the blockchain system, determining the leaf node of the transaction-to-be-traced includes:
determining the input value of the transaction-to-be-traced as an output value to-be-traced;
according to the output value to-be-traced and the Bloom filter corresponding to each block in the blockchain system, determining a block where a transaction, which the transaction-to-be-traced is relied upon, is located;
according to the output value to-be-traced, identifying a first transaction same as the output value to-be-traced in the block where the transaction, which the transaction-to-be-traced is relied upon, is located; and
if the first transaction is a coinbase transaction or a block transaction that meets a preset termination condition, terminating the tracing; otherwise, determining the first transaction as the leaf node of the transaction-to-be-traced, determining an input value of the first transaction as the output value to-be-traced, and continuing the determination of the transaction which the transaction-to-be-traced is relied upon, till it is determined that the tracing is terminated.

Optionally, according to the output value to-be-traced and the Bloom filter corresponding to each block in the blockchain system, determining the block where the transaction, which the transaction-to-be-traced is relied upon, is located includes:
performing a hashing process on the output value to-be-traced using a number m of hash functions in the Bloom filter to obtain values of a number m of corresponding positions; and
if all of the values of the number m of corresponding positions are a preset value, determining a block as the block where the transaction, which the transaction-to-be-traced is replied upon, is located.

Optionally, before acquiring the information of the transaction-to-be-traced, the method further includes:
when a first block is generated, storing output values of all transactions in the first block in a Bloom filter corresponding to the first block.

Optionally, the Bloom filter corresponding to the first block is located in a block header or a Bloom filter array of a database of the blockchain system.

Accordingly, the embodiments of the present disclosure provide a device for blockchain transaction tracing, including:
an acquiring unit, configured to acquire information of a transaction-to-be-traced, where the information of the transaction-to-be-traced includes an input value of the transaction-to-be-traced; and
a processing unit, configured to, according to the input value of the transaction-to-be-traced and a Bloom filter corresponding to each block in a blockchain system, determine a leaf node of the transaction-to-be-traced, where the Bloom filter stores an output value of a transaction contained in each block; and according to the leaf node of the transaction-to-be-traced, generate a tracing path of the transaction-to-be-traced.

Optionally, the processing unit is specifically configured to:
determine the input value of the transaction-to-be-traced as an output value to-be-traced;
according to the output value to-be-traced and the Bloom filter corresponding to each block in the blockchain system, determine a block where a transaction, which the transaction-to-be-traced is relied upon, is located;
according to the output value to-be-traced, identify a first transaction same as the output value to-be-traced in the block where the transaction, which the transaction-to-be-traced is relied upon, is located; and
if the first transaction is a coinbase transaction or a block transaction that meets a preset termination condition, terminate the tracing; otherwise, determine the first transaction as the leaf node of the transaction-to-be-traced, determine an input value of the first transaction as the output value to-be-traced, and continue the determination of the transaction which the transaction-to-be-traced is relied upon, till it is determined that the tracing is terminated.

Optionally, the processing unit is specifically configured to:
perform a hashing process on the output value to-be-traced using a number m of hash functions in the Bloom filter to obtain values of a number m of corresponding positions; and
if all of the values of the number m of corresponding positions are a preset value, determine a block as the block where the transaction, which the transaction-to-be-traced is replied upon, is located.

Optionally, the processing unit is further configured to:
before acquiring the information of the transaction-to-be-traced, when a first block is generated, store output values of all transactions in the first block in a Bloom filter corresponding to the first block.

Optionally, the Bloom filter corresponding to the first block is located in a block header or a Bloom filter array of a database of the blockchain system.

Accordingly, the embodiments of the present disclosure provide a computer-readable storage medium, where the computer-readable storage medium stores computer-executable instructions, and the computer-executable instructions are configured to cause the computer to execute the above-mentioned method for blockchain transaction tracing.

Accordingly, the embodiments of the present disclosure provide a computing device, including a memory and a processor, where the memory, storing program instructions, used to configure the processor; and the processor, configured with one or more executable programs, and the one or more executable programs execute the above-mentioned method for blockchain transaction tracing.

### BRIEF DESCRIPTION OF THE DRAWINGS

In order to clearly illustrate the technical solutions in the embodiments of the present disclosure, the accompanying drawings, which are required to be used in the description of disclosed embodiments, are briefly described hereinafter. Obviously, the accompanying drawings in the following description are merely certain embodiments of the present disclosure. Other accompanying drawings derived from such accompanying drawings may be acquired by those skilled in the art without creative work.
FIG. 1 illustrates a schematic of a system architecture in embodiments of the present disclosure;
FIG. 2 illustrates a schematic flowchart of a method for blockchain transaction tracing in embodiments of the present disclosure;
FIG. 3 illustrates a structural schematic of a block in embodiments of the present disclosure;
FIG. 4 illustrates a schematic of a Bloom filter in embodiments of the present disclosure;
FIG. 5 illustrates a schematic of a leaf node in embodiments of the present disclosure;
FIG. 6 illustrates a schematic of a tracing path in embodiments of the present disclosure;
FIG. 7 illustrates a schematic of a Bloom filter array in embodiments of the present disclosure;
FIG. 8 illustrates a structural schematic of a device for blockchain transaction tracing in embodiments of the present disclosure; and
FIG. 9 illustrates a structural schematic of a computing device in embodiments of the present disclosure.

### DETAILED DESCRIPTION

The technical solutions in the embodiments of the present disclosure are described clearly and completely in conjunction with the drawings in the embodiments of the present disclosure. Obviously, the described embodiments are merely a part of the embodiments of the present disclosure, but not all the embodiments. Based on the embodiments of the present disclosure, all other embodiments obtained by those skilled in the art without creative work fall within the protection scope of the present disclosure.

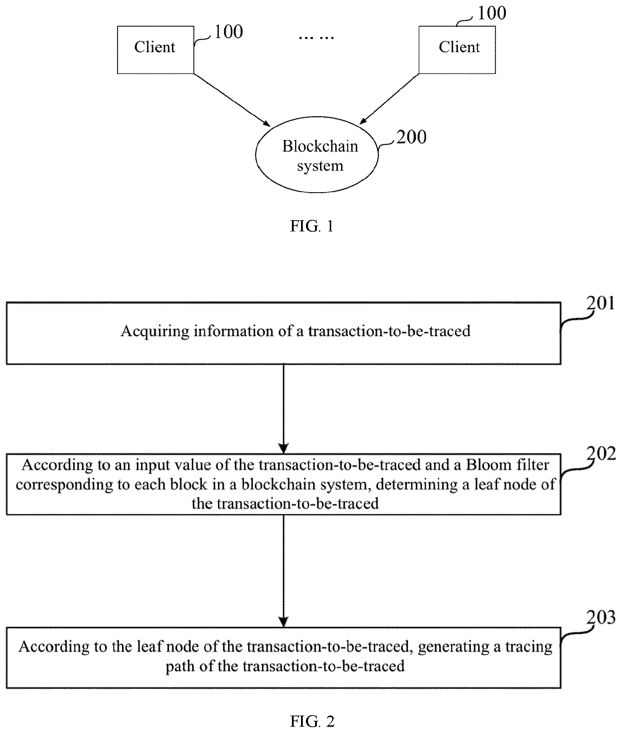

FIG. 1 illustrates a schematic of a system architecture in the embodiments of the present disclosure. Referring to FIG. 1, the system architecture may include a plurality of clients 100 and a blockchain system 200. The clients 100 may be connected to the blockchain system 200 through a network.

The plurality of clients 100 may be clients used by different organizations and institutions, and the blockchain system 200 may be accessed through the clients 100.

It should be noted that the structure shown in FIG. 1 may merely an example, which may not be limited according to the embodiments of the present disclosure.

Based on the above description, FIG. 2 illustrates a flowchart of a method for blockchain transaction tracing in the embodiments of the present disclosure. The flow may be executed by a device for blockchain transaction tracing, which may be the above-mentioned blockchain system.

As shown in Figure 2, the flow may specifically include the following steps.

In step 201, the information of a transaction-to-be-traced may be acquired.

In the embodiments of the present disclosure, the information of the transaction-to-be-traced may include an input value of the transaction-to-be-traced. For the blockchain system of the UTXO account system, each transaction may have an input value and an output value, and the output value of each transaction may be the input value of the next transaction of such transaction. Therefore, all history transactions which the current transaction is relied upon may be traced through the input value of the current transaction.

Before acquiring the information of the transaction-to-be-traced, it is also necessary to configure a corresponding Bloom filter when generating each block, and each block may correspond to a Bloom filter. Specifically, when the first block is generated, the output values of all transactions in the first block may be stored in the Bloom filter corresponding to the first block.

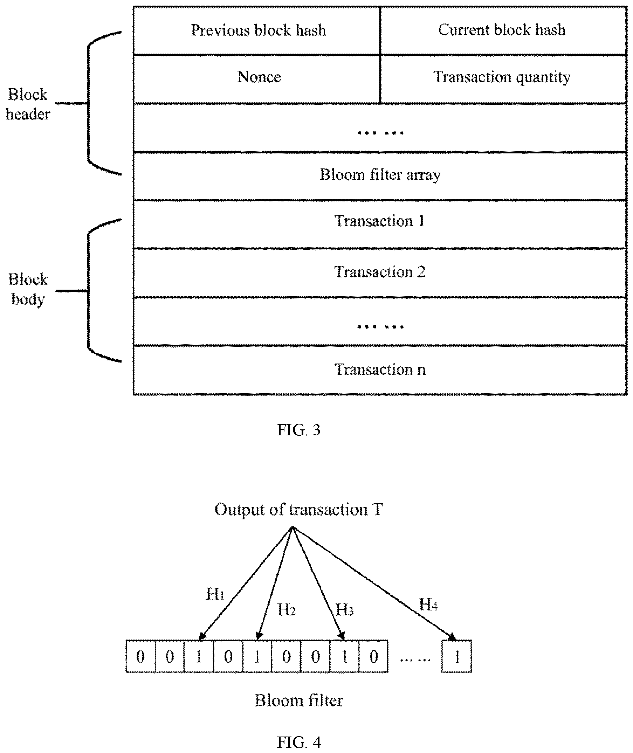

It should be noted that the Bloom filter may be located in the block header of the first block or may also be located in the Bloom filter array of the database of the blockchain system. If the Bloom filter is located in the block header, the specific structure of the block may be shown in FIG. 3.

In step 202, according to the input value of the transaction-to-be-traced and the Bloom filter corresponding to each block in the blockchain system, the leaf node of the transaction-to-be-traced may be determined.

After the input value of the transaction-to-be-traced is obtained, according to the Bloom filter corresponding to each block, the leaf node of the transaction-to-be-traced may be determined. The leaf node may also be a node in the tracing path, and such transaction may be called a leaf transaction, which is a transaction which the transaction-to-be-traced is relied upon.

Specifically, for each block, the input value of the transaction-to-be-traced may be first determined as an output value to-be-traced, and according to the output value to-be-traced and the Bloom filter corresponding to each block in the blockchain system, the block where the transaction, which the transaction-to-be-traced is relied upon, is located may be determined. Then, according to the output value to-be-traced, a first transaction same as the output value to-be-traced may be identified in the block where the transaction, which the transaction-to-be-traced is relied upon, is located. Finally, the determination may be performed; if the first transaction is a coinbase transaction or a transaction of a block that meets a preset termination condition, the tracing may be terminated; otherwise, the first transaction may be determined as the leaf node of the transaction-to-be-traced, and an input value of the first transaction may be determined as the output value to-be-traced, the transactions which the transaction-to-be-traced is relied upon may continue to be determined until it is determined that the tracing is terminated. The preset termination condition may be configured based on experience. Obviously, when determining the first transaction herein, it may also determine whether the first transaction is a transaction in a genesis block or a transaction less than a preset block height, and the like, which may be reasonably adjusted in specific implementation processes.

In the process of determining the block where the transaction, which the transaction-to-be-traced is relied upon, is located, the output value to-be-traced may be hashed using a number m of hash functions in the Bloom filter to obtain the values of a number m of corresponding positions. Then, the determination may be performed; when all of the values of the number m of corresponding positions are a preset value, the block may be determined as the block where the transaction, which the transaction-to-be-traced is relied upon, is located. The preset value herein may be configured based on experience, for example, may be 1. When all of the values of the number m of corresponding positions are 1, it may determine that the transaction which the transaction-to-be-traced is relied upon may be in the block.

In step 203, according to the leaf node of the transaction-to-be-traced, a tracing path of the transaction-to-be-traced may be generated.

When all leaf nodes of the transaction-to-be-traced are obtained, the tracing path of the transaction-to-be-traced may be generated according to such leaf nodes; and the tracing path may be a tree structure, and obviously, may also be other structures such as a graphic structure in specific implementations.

Furthermore, when performing the transaction tracing, multiple threads may be used for simultaneous tracing, thereby accelerating the tracing efficiency.

In order to better explain the embodiments of the present disclosure, the flow for blockchain transaction tracing may be described through specific implementation scenarios hereinafter.

The exemplary embodiment one

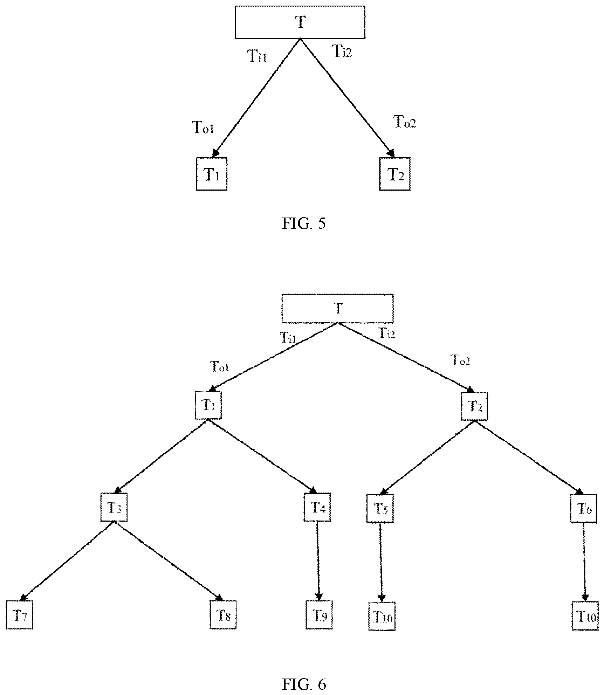

In the embodiment of the present disclosure, a Bloom filter with a size of 1024 bits and a false positive rate of 0.001 may be selected. The path of a transaction T may be traced, and it is assumed that such path may have four levels of transactions and each transaction may have two input values. The specific flow may be as follows.
1) When generating the block, the Bloom filter may be recorded in the block header. Each output value of all transactions in such block may be added to the Bloom filter.
2) A transaction-to-be-traced T may be traced. It is assumed that an input value of T is {Tᵢ₁, Tᵢ₂}. For each input value Tik, let an output value to-be-traced Tₒₖ=Tᵢₖ. A thread may be created, and steps 3-5 may be performed.
3) The block headers of all blocks may be scanned. The Bloom filter A may be extracted from the block header. For the output value to-be-traced Tₒₖ, the output value to-be-traced Tₒₖ may be hashed with the number m of hash functions of the Bloom filter, and whether the value of the corresponding position of the Bloom filter A is 1 may be determined. If all of the values of the number m of corresponding positions are 1, it may indicate that the transaction which generates the output value to-be-traced Tₒₖ is in such block. The details may be shown in FIG. 4, specifically.
4) All transactions in such block may be scanned, and a transaction T1 which generates the output value to-be-traced Tₒₖ may be identified, and T1 may be used as the leaf node of the transaction T, as shown in FIG. 5.
5) For the transaction T1, if T1 is a coinbase transaction, the tracing may be terminated; otherwise, step 2 may be processed.

Finally, a tree-like transaction tracing path may be generated, as shown in FIG. 6, where T7, T8, T9, and T10 are coinbase transactions.

### The exemplary embodiment two

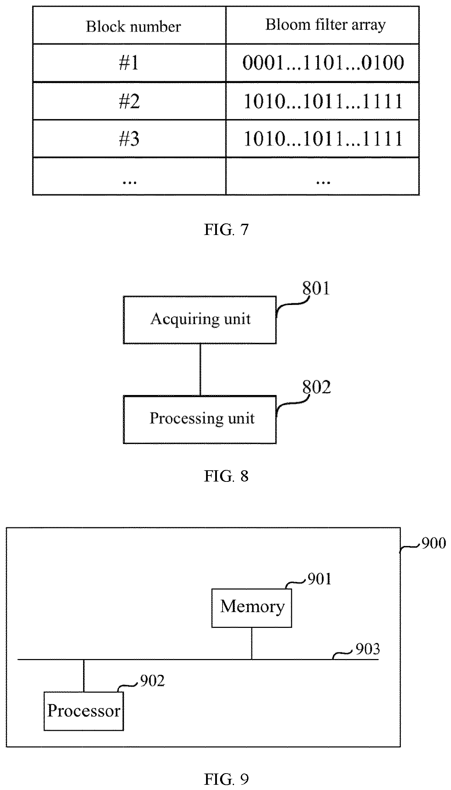

In the embodiment of the present disclosure, a Bloom filter with a size of 1024 bits and a false positive rate of 0.001 may be selected. The path of a transaction T may be traced, and it is assumed that such path may have four levels of transactions and each transaction may have two input values. The specific flow may be as follows.
1) In a preparation stage, for each block, a Bloom filter array may be firstly constructed based on the output values of all transactions in the block and stored in a database with the structure shown in FIG. 7.
2) A transaction-to-be-traced T may be traced. It is assumed that an input value of T is {Tᵢ₁, Tᵢ₂}. For each input value Tik, let an output value to-be-traced Tₒₖ=Tᵢₖ. A thread may be created, and steps 3-5 may be performed.
3) The block headers of all blocks may be scanned. The Bloom filter A may be extracted from the database. For the output value to-be-traced Tₒₖ, the output value to-be-traced Tₒₖ may be hashed with the number m of hash functions of the Bloom filter, and whether the value of the corresponding position of the Bloom filter A is 1 may be determined. If all of the values of the number m of corresponding positions are 1, it may indicate that the transaction which generates the output value to-be-traced Tₒₖ is in such block. The details may be shown in FIG. 4, specifically.
4) All transactions in such block may be scanned, and a transaction T1 which generates the output value to-be-traced Tₒₖ may be identified, and T1 may be used as the leaf node of the transaction T, as shown in FIG. 5.
5) For the transaction T1, if T1 is a coinbase transaction, the tracing may be terminated; otherwise, step 2 may be processed.

Finally, a tree-like transaction tracing path may be generated, as shown in FIG. 6, where T7, T8, T9, and T10 are coinbase transactions.

The above-mentioned embodiments may describe that the information of the transaction-to-be-traced may be acquired; the information of the transaction-to-be-traced may include the input value of the transaction-to-be-traced; according to the input value of the transaction-to-be-traced and the Bloom filter corresponding to each block in the blockchain system, the leaf node of the transaction-to-be-traced may be determined; the Bloom filter may store the output value of the transaction contained in each block; and the tracing path of the transaction-to-be-traced may be generated according to the leaf node of the transaction-to-be-traced. By configuring the Bloom filter corresponding to each block, based on the input value of the transaction to-be-traced, the tracing path of the transaction-to-be-traced may be quickly generated, which is beneficial for improving the tracing efficiency of the tracing path and reducing the system cost.

Based on the same technical concept, FIG. 8 illustrates a structural schematic of a device for blockchain transaction tracing in the embodiments of the present disclosure. The device may execute the flow of blockchain transaction tracing.

As shown in FIG. 8, the device may specifically include:
an acquiring unit 801, configured to acquire information of a transaction-to-be-traced, where the information of the transaction-to-be-traced includes an input value of the transaction-to-be-traced; and
a processing unit 802, configured to, according to the input value of the transaction-to-be-traced and a Bloom filter corresponding to each block in a blockchain system, determine a leaf node of the transaction-to-be-traced, where the Bloom filter stores an output value of a transaction contained in each block; and according to the leaf node of the transaction-to-be-traced, generate a tracing path of the transaction-to-be-traced.

Optionally, the processing unit 802 may be specifically configured to:
determine the input value of the transaction-to-be-traced as an output value to-be-traced;
according to the output value to-be-traced and the Bloom filter corresponding to each block in the blockchain system, determine a block where a transaction, which the transaction-to-be-traced is relied upon, is located;
according to the output value to-be-traced, identify a first transaction same as the output value to-be-traced in the block where the transaction, which the transaction-to-be-traced is relied upon, is located; and
if the first transaction is a coinbase transaction or a block transaction that meets a preset termination condition, terminate the tracing; otherwise, determine the first transaction as the leaf node of the transaction-to-be-traced, determine an input value of the first transaction as the output value to-be-traced, and continue the determination of the transaction which the transaction-to-be-traced is relied upon, till it is determined that the tracing is terminated.

Optionally, the processing unit 802 may be specifically configured to:
perform a hashing process on the output value to-be-traced using a number m of hash functions in the Bloom filter to obtain values of a number m of corresponding positions; and
if all of the values of the number m of corresponding positions are a preset value, determine a block as the block where the transaction, which the transaction-to-be-traced is replied upon, is located.

Optionally, the processing unit 802 may be further configured to:
before acquiring the information of the transaction-to-be-traced, when a first block is generated, store output values of all transactions in the first block in a Bloom filter corresponding to the first block.

Optionally, the Bloom filter corresponding to the first block is located in a block header or a Bloom filter array of a database of the blockchain system.

Based on the same inventive concept, the embodiments of the present disclosure also provide a computer-readable storage medium, including computer-readable instructions; when the computer reads and executes the computer-readable instructions, the computer may cause the computer to execute the above-mentioned blockchain transaction tracing method.

Based on the same inventive concept, the embodiments of the present disclosure also provide a computing device. Referring to FIG. 9, a computing device 900 may be applied to the above-mentioned embodiments of the present disclosure. The computing device 900 may include a memory 901 and a processor 902, where:
the memory 901, storing one or more executable programs, may be used to configure the processor 902; and
the processor 902 may be configured with the one or more executable programs, where the one or more executable programs may be configured to execute the following method: acquiring the information of the transaction-to-be-traced, where the information of the transaction-to-be-traced may include the input value of the transaction-to-be-traced; according to the input value of the transaction-to-be-traced and the Bloom filter corresponding to each block in the blockchain system, determining the leaf node of the transaction-to-be-traced, where the Bloom filter may store the output value of the transaction contained in each block; and generating the tracing path of the transaction-to-be-traced according to the leaf node of the transaction-to-be-traced. The memory 901 may be configured to store programs; specifically, the programs may include program code; the program code may include computer operation instructions; and the memory 901 may be a volatile memory, such as a random-access memory (RAM, also be a non-volatile memory, such as a flash memory, a hard disk drive (HDD) or a solid-state drive (SSD), and also be any one combination or multiple combinations of the above-mentioned volatile memories and non-volatile memories.

The memory 901 may store the following elements (operation instruction(s) and operating instruction(s)), executable modules, data structures, or their subsets or extended sets.

The operating instruction(s) may include a plurality of operating instructions configured to implement various operations.

The various system programs included in an operating system are configured to implement various basic services and process hardware-based tasks.

The processor 902 may be a central processing unit (CPU), a network processor (NP), or a combination of CPU and NP, and may also be a hardware chip. The above-mentioned hardware chip may be an application-specific integrated circuit (ASIC), a programmable logic device (PLD), or a combination thereof. The above-mentioned PLD may be a complex programmable logic device (CPLD), a field-programmable gate array (FPGA), a general array logic (GAL), or any combination thereof. In a possible design, the memory 901 may also be integrated with the processor 902.

A bus 903 may be a peripheral component interconnect (PCI) standard bus or an extended industry standard architecture (EISA) bus, and the like. The buses may be divided into an address bus, a data bus, a control bus, and the like. For ease of representation, the bus may be represented only by one thick line in FIG. 9, but it may not indicate that there is only one bus or one type of bus.

In a possible implementation manner, the processor 902 may be specifically configured to:
determine the input value of the transaction-to-be-traced as an output value to-be-traced;
according to the output value to-be-traced and the Bloom filter corresponding to each block in the blockchain system, determine a block where a transaction, which the transaction-to-be-traced is relied upon, is located;
according to the output value to-be-traced, identify a first transaction same as the output value to-be-traced in the block where the transaction, which the transaction-to-be-traced is relied upon, is located; and
if the first transaction is a coinbase transaction or a block transaction that meets a preset termination condition, terminate the tracing; otherwise, determine the first transaction as the leaf node of the transaction-to-be-traced, determine an input value of the first transaction as the output value to-be-traced, and continue the determination of the transaction which the transaction-to-be-traced is relied upon, till it is determined that the tracing is terminated.

In a possible implementation manner, the processor 902 may be specifically configured to:
perform a hashing process on the output value to-be-traced using a number m of hash functions in the Bloom filter to obtain values of a number m of corresponding positions; and
if all of the values of the number m of corresponding positions are a preset value, determine a block as the block where the transaction, which the transaction-to-be-traced is replied upon, is located.

In a possible implementation manner, the processor 902 may be specifically configured to:
before acquiring the information of the transaction-to-be-traced, when a first block is generated, store output values of all transactions in the first block in a Bloom filter corresponding to the first block.

In a possible implementation manner, the Bloom filter corresponding to the first block is located in a block header or a Bloom filter array of a database of the blockchain system.

The present disclosure is described with reference to flowcharts and/or block diagrams of methods, devices (systems), and computer program products according to the embodiments of the present disclosure. It should be understood that each process and/or block in the flowcharts and/or block diagrams, and the combination of processes and/or blocks in the flowcharts and/or block diagrams may be implemented by computer program instructions. Such computer program instructions may be provided to the processor of a general-purpose computer, a special-purpose computer, an embedded processor, or other programmable data processing apparatus, such that the instructions executed by the processor of the computer or other programmable data processing apparatus may implement the functions specified in one or more processes in the flowcharts and/or one or more blocks in the block diagrams.

Such computer program instructions may also be stored in a computer-readable memory that can direct a computer or other programmable data processing apparatus to work in a specific manner, such that the instructions stored in the computer-readable memory produce a manufacturing article including the instruction device. The instruction device implements the functions specified in one or more processes in the flowcharts and/or one or more blocks in the block diagrams.

Such computer program instructions may also be loaded on a computer or other programmable data processing apparatus, such that a series of operation steps are executed on the computer or other programmable apparatus to produce computer-implemented processing. Therefore, the instructions executed by the processor of the computer or other programmable data processing apparatus may implement the functions specified in one or more processes in the flowcharts and/or one or more blocks in the block diagrams.

Although the preferred embodiments of the present disclosure have been described, those skilled in the art may make additional changes and modifications to such embodiments once they learn the basic creative concept. Therefore, the appended claims may be intended to be interpreted as including the preferred embodiments and all changes and modifications falling within the scope of the present disclosure.

Obviously, those skilled in the art may make various changes and modifications to the present disclosure without departing from the spirit and scope of the present disclosure. In such way, if these modifications and variations of the present disclosure fall within the scope of the claims of the present disclosure and their equivalent technologies, the present disclosure may also be intended to include these modifications and variations.

## Claims

1. A method for blockchain transaction tracing, comprising:
acquiring information of a transaction-to-be-traced, wherein the information of the transaction-to-be-traced includes an input value of the transaction-to-be-traced;
according to the input value of the transaction-to-be-traced and a Bloom filter corresponding to each block in a blockchain system, determining a leaf node of the transaction-to-be-traced, wherein the Bloom filter stores an output value of a transaction contained in each block; and
according to the leaf node of the transaction-to-be-traced, generating a tracing path of the transaction-to-be-traced.

2. The method according to claim 1, wherein according to the input value of the transaction-to-be-traced and the Bloom filter corresponding to each block in the blockchain system, determining the leaf node of the transaction-to-be-traced includes:
determining the input value of the transaction-to-be-traced as an output value to-be-traced;
according to the output value to-be-traced and the Bloom filter corresponding to each block in the blockchain system, determining a block where a transaction, which the transaction-to-be-traced is relied upon, is located;
according to the output value to-be-traced, identifying a first transaction same as the output value to-be-traced in the block where the transaction, which the transaction-to-be-traced is relied upon, is located; and
if the first transaction is a coinbase transaction or a block transaction that meets a preset termination condition, terminating the tracing; otherwise, determining the first transaction as the leaf node of the transaction-to-be-traced, determining an input value of the first transaction as the output value to-be-traced, and continuing the determination of the transaction which the transaction-to-be-traced is relied upon, till it is determined that the tracing is terminated.

3. The method according to claim 2, wherein according to the output value to-be-traced and the Bloom filter corresponding to each block in the blockchain system, determining the block where the transaction, which the transaction-to-be-traced is relied upon, is located includes:
performing a hashing process on the output value to-be-traced using a number m of hash functions in the Bloom filter to obtain values of a number m of corresponding positions; and
if all of the values of the number m of corresponding positions are a preset value, determining a block as the block where the transaction, which the transaction-to-be-traced is replied upon, is located.

4. The method according to any one of claims 1 to 3, before acquiring the information of the transaction-to-be-traced, further including:
when a first block is generated, storing output values of all transactions in the first block in a Bloom filter corresponding to the first block.

5. The method according to claim 4, wherein:
the Bloom filter corresponding to the first block is located in a block header or a Bloom filter array of a database of the blockchain system.

6. A device for blockchain transaction tracing, comprising:
an acquiring unit, configured to acquire information of a transaction-to-be-traced, wherein the information of the transaction-to-be-traced includes an input value of the transaction-to-be-traced; and
a processing unit, configured to, according to the input value of the transaction-to-be-traced and a Bloom filter corresponding to each block in a blockchain system, determine a leaf node of the transaction-to-be-traced, wherein the Bloom filter stores an output value of a transaction contained in each block; and according to the leaf node of the transaction-to-be-traced, generate a tracing path of the transaction-to-be-traced.

7. The device according to claim 6, wherein the processing unit is specifically configured to:
determine the input value of the transaction-to-be-traced as an output value to-be-traced;
according to the output value to-be-traced and the Bloom filter corresponding to each block in the blockchain system, determine a block where a transaction, which the transaction-to-be-traced is relied upon, is located;
according to the output value to-be-traced, identify a first transaction same as the output value to-be-traced in the block where the transaction, which the transaction-to-be-traced is relied upon, is located; and
if the first transaction is a coinbase transaction or a block transaction that meets a preset termination condition, terminate the tracing; otherwise, determine the first transaction as the leaf node of the transaction-to-be-traced, determine an input value of the first transaction as the output value to-be-traced, and continue the determination of the transaction which the transaction-to-be-traced is relied upon, till it is determined that the tracing is terminated.

8. The device according to claim 7, wherein the processing unit is specifically configured to:
perform a hashing process on the output value to-be-traced using a number m of hash functions in the Bloom filter to obtain values of a number m of corresponding positions; and
if all of the values of the number m of corresponding positions are a preset value, determine a block as the block where the transaction, which the transaction-to-be-traced is replied upon, is located.

9. The device according to any one of claims 6 to 8, wherein the processing unit is further configured to:
before acquiring the information of the transaction-to-be-traced, when a first block is generated, store output values of all transactions in the first block in a Bloom filter corresponding to the first block.

10. The device according to claim 9, wherein:
the Bloom filter corresponding to the first block is located in a block header or a Bloom filter array of a database of the blockchain system.

11. A computer-readable storage medium, wherein the computer-readable storage medium stores computer-executable instructions, and the computer-executable instructions are configured to cause a computer to execute the method according to any one of claims 1 to 5.

12. A computing device, comprising:
a memory and a processor; wherein:
the memory stores one or more executable programs, used to configure the processor; and
the processor is configured with the one or more executable programs, wherein the one or more executable programs are configured to execute the method according to any one of claims 1 to 5.
